# EUROPÄISCHE PATENTANMELDUNG

(11) **EP 2 554 520 A2**
(43) Veröffentlichungstag der Anmeldung: **06.02.2013**
(21) Anmeldenummer: 12167682.9
(22) Anmeldetag: 11.05.2012
(51) Int. Cl.: C02F 1/30, C02F 1/04

(54) **Warmsterilisation von Wasser mittels ionisierender Strahlung**

(30) Priorität: 02.08.2011 DE 102011080262
(71) Anmelder: Krones AG, 93073 Neutraubling (DE)
(72) Erfinder: Scheuren, Hans, 93055 Regensburg (DE)
(74) Vertreter: Grünecker, Kinkeldey, Stockmair & Schwanhäusser

(57) **Zusammenfassung**

Die vorliegende Erfindung betrifft ein Verfahren zum Sterilisieren einer Flüssigkeit, insbesondere von Wasser mit den Schritten: Verdampfen zumindest eines Teils der Flüssigkeit, und Bestrahlen der verdampften Flüssigkeit mit ionisierender Strahlung, insbesondere mit Elektronen. Weiterhin betrifft die vorliegende Erfindung eine Vorrichtung zum Sterilisieren einer Flüssigkeit, insbesondere von Wasser, umfassend: eine Sterilisationskammer (210) zum Aufnehmen eines verdampften Teils der Flüssigkeit und eine Quelle von ionisierender Strahlung (Elektronenstrahlerzeuger 220) zum Bestrahlen des verdampften Teils der Flüssigkeit.

## Beschreibung

### Gebiet der Erfindung

Die vorliegende Erfindung betrifft ein Verfahren zum Sterilisieren einer Flüssigkeit, insbesondere von Wasser. Weiterhin betrifft die Erfindung eine Vorrichtung zum Sterilisieren einer Flüssigkeit, insbesondere von Wasser.

### Stand der Technik

Die Sterilisierung von Flüssigkeiten ist im Lebensmittelbereich von großer Bedeutung. Gängige Verfahren beinhalten z. B. das Erhitzen der Flüssigkeit auf eine hohe Temperatur, um darin enthaltene Bakterien abzutöten. Nachteilig ist dabei, dass die dafür erforderlichen Temperaturen und Zeitdauern relativ hoch sind (beispielsweise einige Minuten bei 121 ° C). Andere Sterilisierungsmethoden wie etwa Dampfsterilisation oder Heißluftsterilisation sind für die Anwendung bei Flüssigkeiten ungeeignet. Ein weiteres Verfahren zur Sterilisation ist die Bestrahlung mit ionisierender Strahlung, entweder mit UV-, Röntgen-, Gammastrahlung oder durch Bestrahlung mittels Elektronenbeschuss. Die Bestrahlung mit ionisierender Strahlung erfordert jedoch hohe Strahlungsenergien, um hinreichend tief in das zu sterilisierende Medium einzudringen.

Aus der Druckschrift WO02/058742 A1 ist ein Verfahren zur Dekontamination von Oberflächen auf einem Lebewesen bekannt, das mit relativ niederenergetischen Elektronen im Energiebereich von 40 kV bis 60 kV betrieben wird, um z. B. auf der Oberfläche befindliche Bakterien abzutöten indem ihre Zellstruktur zerstört wird, ohne jedoch dabei die (Haut-) Oberfläche des Lebewesens zu zerstören.

Angesichts dieser Nachteile des Stands der Technik ist es eine Aufgabe der vorliegenden Erfindung, diese Nachteile zu vermeiden und ein Verfahren und eine Vorrichtung zur Verfügung zu stellen, mit denen Flüssigkeiten unter vergleichsweise geringem Energieaufwand sterilisiert werden können.

### Beschreibung der Erfindung

Die oben genannte Aufgabe wird gelöst durch ein Verfahren zum Sterilisieren einer Flüssigkeit, insbesondere von Wasser, mit den Schritten: Verdampfen zumindest eines Teils der Flüssigkeit und Bestrahlen der verdampften Flüssigkeit mit ionisierender Strahlung, insbesondere mit Elektronen. Durch das Verdampfen wird die Flüssigkeit in den dampfförmigen Zustand überführt und dann mit ionisierender Strahlung (beispielsweise mit Elektronenstrahlen) bestrahlt. Aufgrund des dampfförmigen Zustands des zu sterilisierenden Mediums/Fluids ist die Reichweite der ionisierenden Strahlung größer als im flüssigen Zustand. Dies reduziert die erforderlichen Strahlungsenergien (also beispielsweise die Energie eines einzelnen Elektrons) und somit auch den gesamten Energieaufwand zur Sterilisierung. Das Verdampfen kann beispielsweise mittels eines Fallstromverdampfers durchgeführt werden.

Der Vorteil des Verfahrens darin, dass es aufgrund einer fehlenden Aufheizung des zu sterilisierenden Mediums sehr schnell abläuft, und dass dadurch und durch den Einsatz von ionisierenden Strahlung, z.B. Elektronen von einem Elektronenstrahler, das Verfahren mit vergleichsweise niedrigem Energieaufwand durchführbar ist.

Gemäß einer Weiterbildung des erfindungsgemäßen Verfahrens kann der Schritt des Verdampfens ein Entspannungsverdampfen umfassen. Das Entspannungsverdampfen bietet eine einfache Methode zum Durchführen des Verdampfens. Dabei wird die Flüssigkeit in einen Raum mit niedrigerem Druck eingebracht, z.B. von atmosphärischem Druck der Flüssigkeit in einen Raum mit demgegenüber reduziertem Druck, so dass ein zumindest teilweiser Phasenübergang in die gasförmige Phase erfolgt.

Gemäß einer Weiterbildung kann das Verfahren den weiteren Schritt des Einleitens der verdampften Flüssigkeit in eine Sterilisationskammer umfassen, oder der Schritt des Entspannungsverdampfens kann das Einleiten der Flüssigkeit in eine Sterilisationskammer umfassen. Auf diese Weise wird die verdampfte Flüssigkeit zum Sterilisieren bereitgestellt bzw. die Flüssigkeit kann in ein vordefiniertes Volumen entspannt werden, in welchem die Flüssigkeit kontrolliert sterilisiert werden kann.

Das Absenken des Drucks in der Sterilisationskammer kann vor dem Einleiten der Flüssigkeit in die Sterilisationskammer erfolgen. Das Absenken des Drucks in der Sterilisationskammer kann beispielsweise durch eine Pumpe erfolgen, die in der Sterilisationskammer vorhandene Luft teilweise absaugt und einen Unterdruck erzeugt. Im Falle des Absenkens des Drucks nach dem Einleiten kann dies beispielsweise auch durch plötzliche Expansion des Volumens erfolgen, indem beispielsweise ein beweglicher Stempel/Kolben herausgezogen wird. Indem das Absenken auch während des Einleitens durchgeführt wird, kann der Sterilisierungsprozess kontinuierlich durchgeführt werden.

Gemäß einer Weiterbildung kann der Druck in der Sterilisationskammer kleiner als der atmosphärische Druck sein, vorzugsweise im Bereich von 20 mbar bis 800 mbar, wobei die Flüssigkeit mit atmosphärischem Druck in die Sterilisationskammer eingeleitet wird. Auf diese Weise wird bei Eintritt in die Sterilisationskammer eine Verdampfung eines großen Teils des Wassers in Form einer Entspannung stattfinden. Durch den geringen Druck und die Überführung des Wassers von der flüssigen Phase in einen dampfförmigen Zustand ist die Reichweite der emittierten Elektronen größer, als unter atmosphärischen Bedingungen. Zudem ist die Ozonproduktion geringer als unter atmosphärischen Druckbedingungen.

In einer Weiterbildung kann das Verfahren den weiteren Schritt des Kondensierens des bestrahlten Dampfes, insbesondere durch Erhöhen des Drucks in der Sterilisationskammer, umfassen. Dadurch wird der normale Atmosphärendruck wieder aufgebaut und der Wasserdampf kondensiert zu flüssigem Wasser.

Gemäß einer Weiterbildung des Verfahrens kann vor dem Entspannungsverdampfen ein Erwärmen der Flüssigkeit erfolgen, insbesondere auf eine Temperatur von 20° C bis 60° C. Durch diese geringfügige Erwärmung kann der für die Entspannungsverdampfung nötige Differenzdruck in der Sterilisationskammer reduziert werden, also der in der Sterilisationskammer erforderliche Druck kann erhöht werden.

In einer alternativen Weiterbildung kann der Druck in der Sterilisationskammer dem atmosphärischen Druck entsprechen, und die Flüssigkeit kann mit einem Druck eingeleitet werden, der größer als der atmosphärische Druck ist. Auch dabei findet ein Entspannungsverdampfen statt, jedoch beeinflusst der Atmosphärendruck und die damit verbundene Luftdichte in der Sterilisationskammer die Reichweite der ionisierenden Strahlung.

Eine andere Weiterbildung des erfindungsgemäßen Verfahrens und deren Weiterbildungen besteht darin, dass der weitere Schritt des Begasens der Sterilisationskammer mit steriler Luft zum Entfernen von Ozon erfolgen kann, insbesondere nach dem Bestrahlen mit ionisierender Strahlung. Auf diese Weise kann das durch die Stöße der Elektronen mit Luftmolekülen erzeugte Ozon wieder entfernt werden.

Das Verfahren kann diskontinuierlich ausgeführt werden, indem die jeweiligen Verfahrensschritte wiederholt werden, oder das Verfahren kann kontinuierlich ausgeführt werden.

Die oben genannte Aufgabe wird weiterhin gelöst durch eine Vorrichtung zum Sterilisieren einer Flüssigkeit, insbesondere von Wasser, welche umfasst: eine Sterilisationskammer zum Aufnehmen eines entspannungsverdampften Teils der Flüssigkeit und eine Quelle von ionisierender Strahlung, insbesondere von Elektronen, zum Bestrahlen des entspannungsverdampften Teils der Flüssigkeit. Die Vorteile dieser Vorrichtung gegenüber Vorrichtungen zum Sterilisieren einer Flüssigkeit nach dem Stand der Technik sind bereits im Zusammenhang mit dem erfindungsgemäßen Verfahren genannt worden, und auf eine Wiederholung wird hier verzichtet.

Nach einer Weiterbildung kann die erfindungsgemäße Vorrichtung Mittel zum Absenken des Drucks in der Sterilisationskammer umfassen, insbesondere eine Flüssigkeitsringpumpe. Somit wird ein effektives Mittel zum Absenken des Drucks bereit gestellt.

Eine andere Weiterbildung besteht darin, dass die Vorrichtung weiterhin einen ersten Behälter für unsterilisierte Flüssigkeit und eine Pumpe zum Befördern der unsterilisierten Flüssigkeit in die Sterilisationskammer umfassen kann. Auf diese Weise wird ein Vorlagebehälter für die unsterilisierte Flüssigkeit zur Verfügung gestellt.

Eine andere Weiterbildung der Vorrichtung besteht darin, dass sie weiterhin einen zweiten Behälter für sterilisierte Flüssigkeit und eine Pumpe zum Befördern der sterilisierten Flüssigkeit aus der Sterilisationskammer in dem zweiten Behälter umfassen kann. Somit wird ein Aufnahmebehältnis für sterilisierte Flüssigkeiten zur Verfügung gestellt, aus dem die sterilisierte Flüssigkeit zur weiteren Verarbeitung entnommen werden kann.

Ein andere Weiterbildung der Vorrichtung besteht darin, dass Mittel zum Erwärmen der unsterilisierten Flüssigkeit vorgesehen sein können, so dass die unsterilisierte Flüssigkeit beispielsweise auf 20° C bis 60° C aufgeheizt werden kann, um den Prozess des Entspannungsverdampfens effizienter ausführen zu können.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

- Figur 1: stellt eine erste Ausführungsform der erfindungsgemäßen Vorrichtung dar.
- Figur 2: stellt eine zweite Ausführungsform der erfindungsgemäßen Vorrichtung dar.

### Ausführungsformen

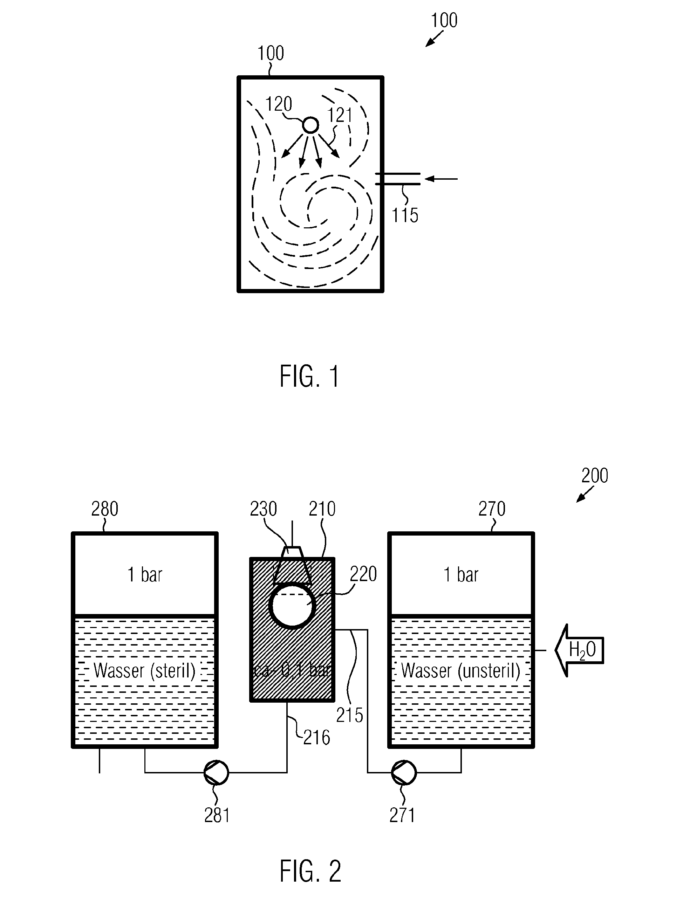

Figur 1 zeigt eine erste Ausführungsform der erfindungsgemäßen Vorrichtung zum Sterilisieren einer Flüssigkeit, in diesem Fall von Wasser. Die Vorrichtung ist in dieser Ausführungsform so ausgebildet, dass ein Verdampfen der Flüssigkeit durch ein Entspannen der Flüssigkeit in einen Raum mit niedrigerem Druck, also mittels Entspannungsverdampfen erzielt wird.

Die Vorrichtung 100 umfasst eine Sterilisationskammer 110 zum Aufnehmen eines entspannungsverdampften Teils des Wassers und eine Quelle 120 von ionisierender Strahlung, in diesem Fall von Elektronen 121, zum Bestrahlen des entspannungsverdampften Teils des Wassers. Das Wasser wird hier unter atmosphärischem Druck durch einen Einlass 115 in die Sterilisationskammer 110 eingebracht. In der Sterilisationskammer 110 herrscht ein Unterdruck, wodurch ein Verdampfen des Wassers durch Entspannen erfolgt. Beim Einleiten des Wassers unter atmosphärischem Druck mit einer Temperatur von beispielsweise 30° C ist in der Sterilisationskammer ein Druck von ca. 40 mbar erforderlich, um eine möglichst vollständige Entspannungsverdampfung des Wassers zu erzielen. Der Zusammenhang zwischen Wassertemperatur und erforderlichem Druck in der Sterilisationskammer wird durch die dem Fachmann bekannte Dampfdruckkurve bestimmt.

Durch die Elektronenstrahlen 121 werden im Wasser vorhandene Keime abgetötet, wobei aufgrund der Druckabsenkung in der Sterilisationskammer eine hinreichend große freie Weglänge für die Elektronen zur Verfügung steht, da die Dichte der Luft entsprechend reduziert ist. Die erforderlichen Elektronenenergien liegen im Bereich von 10 keV bis 100 keV (im Sinne der erforderlichen Beschleunigungsspannungen für die Elektronen).

Figur 2 zeigt eine zweite Ausführungsform der erfindungsgemäßen Vorrichtung, wobei in diesem Fall neben der Sterilisationskammer 210 ein erster Behälter 270 für unsteriles Wasser oder ein zweiter Behälter 280 für sterilisiertes Wasser vorgesehen sind. Unsterilisiertes Wasser wird von dem ersten Behälter 270 mittels einer Pumpe 271 über einen Einlass 215 in die Sterilisationskammer befördert, in der ein Druck von ca. 0,1 bar herrscht. Dieser Druck bzw. Unterdruck wird mittels einer Pumpe 230 erzeugt.

Weiterhin ist ein Elektronenstrahlerzeuger 220 in der Sterilisationskammer 210 vorgesehen. Sterilisiertes und wieder auskondensiertes Wasser wird über einen Auslass 216 mittels der Pumpe 281 in den zweiten Behälter 280 befördert. Zum Kondensieren der sterilisierten Dämpfe wird der Druck in der Sterilisationskammer wieder auf den atmosphärischen Druck angehoben und nach einem Abpumpen des sterilisierten Wassers wieder abgesenkt, wonach ein weiterer Zyklus erfolgen kann.

Das Verfahren und die Vorrichtung gemäß der Erfindung ermöglichen eine Sterilisation von Brauchwasser mit geringem Einsatz thermischer Energie und unter Verwendung eines Elektronenstrahlers. Das zu sterilisierende Wasser wird beispielsweise auf ca. 40° C erhitzt und von Umgebungsdruck auf einen entsprechenden Unterdruck von ca. 40 mbar entspannt. Dieser Druckwechsel führt zu einer Verdampfung des Wassers, wobei die Erzeugung des Unterdrucks energieeffizient durch Einsatz einer Flüssigkeitsringpumpe erfolgen kann. Dieser Vorgang ist chemiefrei und von rein physikalischer Natur. Mit Abschluss der Bestrahlung wird der sterile Dampf wieder auf Normaldruck gebracht. Es erfolgte eine sofortige Kondensation. Nach erfolgter Entkeimung kann etwaiges Ozon, das aufgrund der Sauerstoffarmut der in Behandlungskammer nur in geringer Konzentration entsteht, durch die Begasung mit Sterilluft entfernt werden. Weiterhin kann die freigewordene Kondensationswärme als Verdampfungsenthalpie wiedergewonnen werden.

In dem rechten Behälter in Figur 2 wird aufbereitetes Wasser mit einer Temperatur von 20° C bis 60° C vorgelegt, wobei jedoch auch höhere Temperaturen möglich sind. Über die Pumpe wird das Wasser zur Behandlung in die Unterdruckkammer befördert. Es herrscht temperaturabhängig ein Druck von 20 mbar bis 800 mbar, sodass bei Eintritt in die Kammer eine möglichst weitgehende Verdampfung des Wassers in Form einer Entspannungsverdampfung (flash evaporation) stattfindet. Gleichzeitig oder anschließend wird der Dampf mit einem Elektronenstrahler bestrahlt. Durch den geringen Luftdruck und die Überführung des Wassers von der flüssigen in einen dampfförmigen Zustand ist die Reichweite der emittierten Elektronen größer als unter atmosphärischen Bedingungen und im flüssigen Zustand des Wassers. Weiterhin ist die Ozonproduktion minimal.

Alternativ dazu kann das Wasser von einem Zustand des Überdrucks auf atmosphärischen Druck entspannt werden. Hierfür muss das Wasser überhitzt sein. Ein Nachteil im Vergleich zur vorgehenden Ausführung besteht darin, dass der vergleichsweise hohe Atmosphärendruck die Reichweite des Elektronenstrahls verringert.

Ein Vorteil des erfindungsgemäßen Verfahrens besteht darin, dass es aufgrund einer nicht erforderlichen Aufheizung sehr schnell durchgeführt werden kann, und dass der Einsatz eines Elektronenstrahlers mit vergleichsweise niedriger Energie möglich ist. Das Verfahren kann mehrstufig ausgeführt werden, diskontinuierlich erfolgen oder auch kontinuierlich durchgeführt werden.

Weiterhin kann der Ladungszustand des Wassers mit Keimen gas- und flüssigkeitsseitig zum Zweck der Überprüfung des Sterilisationsgrades überprüft werden.

## Patentansprüche

1. Verfahren zum Sterilisieren einer Flüssigkeit, insbesondere von Wasser, mit den Schritten:
Verdampfen zumindest eines Teils der Flüssigkeit; und
Bestrahlen der verdampften Flüssigkeit mit ionisierender Strahlung, insbesondere mit Elektronen.

2. Verfahren nach Anspruch 1, wobei der Schritt des Verdampfens ein Entspannungsverdampfen umfasst.

3. Verfahren nach Anspruch 1 mit dem weiteren Schritt des Einleitens der verdampften Flüssigkeit in eine Sterilisationskammer; oder nach Anspruch 2, wobei der Schritt des Entspannungsverdampfens das Einleiten der Flüssigkeit in eine Sterilisationskammer umfasst.

4. Verfahren nach Anspruch 3, mit dem weiteren Schritt:
Absenken des Drucks in der Sterilisationskammer, wobei das Absenken vor und/oder während und/oder nach dem Einleiten erfolgt.

5. Verfahren nach Anspruch 4, wobei der Druck in der Sterilisationskammer kleiner als der atmosphärische Druck ist, vorzugsweise im Bereich von 20 mbar bis 800 mbar, und die Flüssigkeit mit atmosphärischem Druck eingeleitet wird.

6. Verfahren nach einem der Ansprüche 1 bis 5 mit dem weiteren Schritt:
Kondensieren des bestrahlten Dampfes, insbesondere durch Erhöhen des Drucks in der Sterilisationskammer.

7. Verfahren nach einem der Ansprüche 1 bis 6 mit dem weiteren Schritt:
Erwärmen der Flüssigkeit vor dem Verdampfen, insbesondere auf eine Temperatur von 20 °C bis 60 °C.

8. Verfahren nach Anspruch 3, wobei der Druck in der Sterilisationskammer dem atmosphärischen Druck entspricht und die Flüssigkeit mit einem Druck eingeleitet wird, der größer als der atmosphärische Druck ist.

9. Verfahren nach Anspruch 3 oder einem der Ansprüche 4 bis 8 in Kombination mit Anspruch 3 mit dem weiteren Schritt:
Begasen der Sterilisationskammer mit Sterilluft zum Entfernen von Ozon.

10. Verfahren nach einem der Ansprüche 1 bis 9, wobei das Verfahren diskontinuierlich ausgeführt wird indem die jeweiligen Verfahrensschritte wiederholt werden oder wobei das Verfahren kontinuierlich ausgeführt wird.

11. Vorrichtung zum Sterilisieren einer Flüssigkeit, insbesondere von Wasser, umfassend:
eine Sterilisationskammer zum Aufnehmen eines verdampften, insbesondere entspannungsverdampften Teils der Flüssigkeit; und
eine Quelle von ionisierender Strahlung, insbesondere von Elektronen, zum Bestrahlen des verdampften, insbesondere entspannungsverdampften Teils der Flüssigkeit.

12. Vorrichtung nach Anspruch 11, weiterhin umfassend:
Mittel zum Absenken des Drucks in der Sterilisationskammer, insbesondere eine Flüssigkeitsringpumpe.

13. Vorrichtung nach Anspruch 11 oder 12, weiterhin umfassend:
einen ersten Behälter für unsterilisierte Flüssigkeit; und
eine Pumpe zum Befördern der unsterilisierten Flüssigkeit in die Sterilisationskammer.

14. Vorrichtung nach einem der Ansprüche 11 bis 13, weiterhin umfassend:
einen zweiten Behälter für sterilisierte Flüssigkeit;
eine Pumpe zum Befördern der sterilisierten Flüssigkeit aus der Sterilisationskammer in den zweiten Behälter.

15. Vorrichtung nach einem der Ansprüche 11 bis 14, weiterhin umfassend:
Mittel zum Erwärmen der unsterilisierten Flüssigkeit.
